(19) Europäisches Patentamt
European Patent Office
Office européen des brevets

(11) **EP 3 781 916 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **19718617.4**

(22) Anmeldetag: **10.04.2019**

(51) Internationale Patentklassifikation (IPC):
**G01J 3/26** *(2006.01)*      **G01J 5/02** *(2022.01)*
**G02B 26/00** *(2006.01)*      **G01J 3/02** *(2006.01)*

(52) Gemeinsame Patentklassifikation (CPC):
**G01J 3/26; G01J 3/027; G01J 3/0291; G01J 5/0235; G02B 26/001**

(86) Internationale Anmeldenummer:
**PCT/EP2019/059035**

(87) Internationale Veröffentlichungsnummer:
**WO 2019/201694 (24.10.2019 Gazette 2019/43)**

(54) **INTERFEROMETER UND VERFAHREN ZUM HERSTELLEN EINES INTERFEROMETERS**

INTERFEROMETER AND METHOD FOR PRODUCING AN INTERFEROMETER

INTERFÉROMÈTRE ET PROCÉDÉ POUR LA FABRICATION D'UN INTERFÉROMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2018   DE 102018205778**

(43) Veröffentlichungstag der Anmeldung:
**24.02.2021   Patentblatt 2021/08**

(73) Patentinhaber: **Robert Bosch GmbH
70442 Stuttgart (DE)**

(72) Erfinder:
• **NOLTEMEYER, Ralf
71083 Herrenberg (DE)**
• **HUBER, Christian
71638 Ludwigsburg (DE)**
• **ROEDEL, Reinhold
72760 Reutlingen (DE)**
• **STEIN, Benedikt
70193 Stuttgart (DE)**
• **SCHELLING, Christoph
70619 Stuttgart (DE)**
• **KRAEMMER, Christoph Daniel
76137 Karlsruhe (DE)**

(56) Entgegenhaltungen:
WO-A1-02/086582      WO-A1-2018/024543
JP-A- 2012 127 862      US-A1- 2016 286 054

**Beschreibung**

Stand der Technik

Die Erfindung geht aus von einer Vorrichtung oder einem Verfahren nach Gattung der unabhängigen Ansprüche. Gegenstand der vorliegenden Erfindung ist auch ein Computerprogramm zur Steuerung einer Vorrichtung zur Herstellung eines Interferometers.

Durchstimmbare spektrale Filter mit der Möglichkeit der Miniaturisierung lassen sich mittels MEMS-Technologie beispielsweise als Fabry-Pérot-Interferometer realisieren. Dabei wird ausgenutzt, dass eine Kavität bestehend aus zwei planparallelen, hochreflektierenden Spiegeln mit einem gegenseitigen Abstand im Bereich optischer Wellenlängen eine starke Transmission nur für Wellenlängen zeigt, bei denen die Kavitätslänge einem ganzzahligen Vielfachen der halben Wellenlänge entspricht. Der Abstand, auch Kavitätslänge genannt, lässt sich beispielsweise mittels elektrostatischer oder piezoelektrischer Aktuierung verändern, wodurch ein spektral durchstimmbares Filterelement entsteht. Ein kritischer Einflussfaktor auf die Performance eines solchen Spektrometers ist die Parallelität bzw. Planparallelität der beiden Spiegel. Diese sollte möglichst hoch sein, sodass zwischen den beiden Spiegeln eine definierte Kavitätslänge mit einer möglichst hohen effektiven Finesse entsteht.

Ein Großteil der bekannten Fabry-Pérot-Interferometer verwendet eine elektrostatische Aktuierung der Spiegel, wie sie beispielsweise in den Druckschriften US 2012050751, US 2014022643 oder DE10226305 beschrieben ist. Dabei wird eine Spannung zwischen zwei Elektroden angelegt, die sich auf der Ebene der beiden Spiegel oder alternativ auf einer zu den Spiegeln parallelen Ebene befinden, sodass sich aufgrund der elektrostatischen Anziehung beide Spiegel aufeinander zubewegen. Die Spiegel sind dabei entweder als Membranspiegel oder massive Spiegel auf einem Substrat ausgeführt.

Bei dieser Form der elektrostatischen Aktuierung ist der maximale Verfahrweg der Spiegel zueinander physikalisch auf ein Drittel des initialen Abstands der Elektroden begrenzt, da es bei größeren Verfahrwegen zu einem spontanen Zusammenschnappen der Elektroden kommt, auch Snap-in oder Pull-in genannt, wodurch das Fabry-Pérot-Interferometer beschädigt werden kann. Für ein Fabry-Pérot-Interferometer ist ein möglichst großer Verfahrweg vorteilhaft, denn daraus ergibt sich der durchstimmbare Wellenlängenbereich, der interferometrisch adressiert werden kann. Der Verfahrweg kann beispielsweise erhöht werden, indem Elektroden und Spiegelschicht bei mindestens einem der Spiegel auf unterschiedlichen Ebenen angebracht werden. In der Schrift US2014022643 ist beispielsweise der Spiegel auf einem Podest angebracht und die Elektroden werden in einer Vertiefung angebracht, sodass der Abstand der Elektroden größer ist als der Abstand der Spiegel. Dabei werden die Spiegel jedoch weiterhin aufeinander zu aktuiert. Durch den größeren Elektrodenabstand wird für den gleichen Verfahrweg eine höhere Aktuationsspannung benötigt. Weiterhin lässt sich ein solcher Ansatz mit nebeneinander angeordneten und verschieden großen Spalten für Optik und Aktuierung nur schwer für Membranspiegel realisieren.

In der DE 69628669 T2 ist ein durchstimmbares Fabry-Pérot-Interferometer beschrieben, das zwei Membranen mit Anschlägen umfasst, die an zwei gegenüberliegenden Seiten einer Haltestruktur angeordnet sind. Jede Membran ist jeweils mit einer Spannungsquelle verbunden. Durch Anlegen einer elektrischen Spannung können die Membranen jeweils relativ zur Haltestruktur und damit relativ zueinander ausgelenkt werden.

Zusammenfassend erlaubt der Stand der Technik somit nur eine Bauelementearchitektur, bei der die maximale Transmissionswellenlänge aufgrund des initialen Spiegelabstands in Ruhe durch die Prozessführung fix vorgegeben ist und die minimale Transmissionswellenlänge durch das elektrostatische Zusammenschnappen begrenzt ist.

Die Druckschrift WO 2018/024543 A1 offenbart ein Interferometer und ein Verfahren zum Betreiben desselben.

Die Druckschrift WO 02/086582 A1 offenbart ein abstimmbares Fabry-Pérot-Filter auf MEMS-Basis und ein Verfahren zu dessen Herstellung.

Die Druckschrift JP 2012 127862 A offenbart ein Fabry-Pérot-Interferometer-Die Druckschrift US 2016/286054 A1 offenbart eine Farbmessvorrichtung, ein Bilderzeugungsgerät, eine elektronische Ausrüstung, eine Farbkarte und ein Farbmessverfahren.

Offenbarung der Erfindung

Vor diesem Hintergrund werden mit dem hier vorgestellten Ansatz ein Interferometer, ein Verfahren zum Herstellen eines Interferometers, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der hier vorgestellte Ansatz beruht auf der Erkenntnis, dass ein Interferometer, etwa ein durchstimmbares Fabry-Pérot-Interferometer mit elektrostatischer Aktuierung zur Verkleinerung oder Vergrößerung eines Spiegelabstands, mit Spiegeln realisiert werden kann, die auf einer gemeinsamen Seite eines Substrats oder auch zwischen einer Kappe und dem Substrat angeordnet sind. Vorteilhafterweise wird dabei durch eine Separation eines optischen Spalts zwischen den Spiegeln von einem Aktuationsspalt eine Erweiterung des maximalen Verfahrwegs unabhängig vom Transmissionsbereich des Interferometers ermöglicht. Dies behebt den Mangel der üblicherweise beschränkten Durchstimmbarkeit von Fabry-Pérot-Interferometern aufgrund eines ungenügenden Verfahrwegs bei elektrostatischer Aktuation. Somit wird eine unabhängige Einstellung einer initialen Durchlasswellenlänge und eines Verfahrbereichs ermöglicht. Beispielsweise erlaubt der hier vorgestellte Ansatz auch eine bidirektionale Aktuation der Spiegel, sodass bei einer vorgeschriebenen maximalen Spannung der Verfahrweg verglichen mit einer unidirektionalen Aktuation vergrößert ist. Ferner wird die Gefahr eines elektrostatischen Zusammenschnappens oder Zusammenziehens der Spiegelschichten verringert, da aufgrund des größeren möglichen Verfahrwegs das System weiter vom Pull-in-Punkt entfernt betrieben werden kann sowie im Falle eines unidirektionalen Betriebs die Spiegel voneinander weg aktuiert werden, d.h. der Abstand zwischen den Spiegeln vergrößert wird.

Der hier beschriebene Ansatz erlaubt die Schaffung mechanisch und optisch symmetrischer Systeme, die robuster gegenüber der Einkopplung von externen Störungen wie beispielsweise Vibrationen sind. Da die Struktur auch aus optischer Sicht bezüglich der Brechungsindizes der beteiligten Materialien eine hohe Symmetrie aufweist, ist ebenfalls die maximale Transmission erhöht, da die Spiegel mit identischer Reflexion hergestellt werden können.

Es wird ein Interferometer mit den Merkmalen von Anspruch 1 vorgestellt.

Unter einem Interferometer kann beispielsweise ein Fabry-Pérot-Interferometer oder eine sonstige Vorrichtung zum Filtern elektromagnetischer Wellen mittels Interferenz verstanden werden. Das Interferometer kann beispielsweise in MEMS-Technologie realisiert sein. Unter einem ersten oder zweiten Spiegelelement kann ein für elektromagnetische Strahlung teildurchlässiges reflektierendes Element, etwa in Form einer Spiegelmembran oder einer Spiegelschicht, verstanden werden. Unter einem Halteelement kann beispielsweise ein Element verstanden werden, das eine Substratlage, etwa in Form eines Substratwafers, oder eine Kappe des Interferometers, etwa in Form eines Kappenwafers, aufweist. Zusätzlich kann das Halteelement ferner auch eine Zusatzschicht wie beispielsweise eine Opferschicht aufweisen, in der die Aktuierungsausnehmung eingebracht ist. Beispielsweise kann hierdurch bei einer Auswahl des Materials der Zusatzschicht eine besonders einfache Ausbildung der Aktuierungsausnehmung in dem Halteelement ermöglicht werden, wobei dennoch eine stabile Halterung beispielsweise der Spiegelelemente und des Elektrodenpaars sichergestellt werden kann. Unter einer räumlichen Trennung des optischen Spalts von der Aktuierungsausnehmung durch das erste Spiegelelement kann verstanden werden, dass beispielsweise das erste Spiegelelement zwischen dem optischen Spalt und der Aktuierungsausnehmung angeordnet ist. Hierbei braucht das erste Spiegelelement nicht zwingendermaßen derart ausgestaltet sein, dass auch eine fluidische Trennung des optischen Spalts von der Aktuierungsausnehmung sichergestellt ist; es kann beispielsweise auch das erste Spiegelelement perforiert sein oder ein Performationsmuster aufweisen, sodass das erste Spiegelelement dennoch den optischen Spalt von der Aktuierungsausnehmung gemäß dem Verständnis dieser Beschreibung räumlich trennt.

Beispielsweise kann in einer Ausführungsform des hier vorgestellten Ansatzes ein Aktuierungsspalt durch das erste Spiegelelement, das am Halteelement der Aktuierungsausnehmung gegenüberliegend angeordnet oder anordenbar ist, begrenzt werden. Durch das erste Spiegelelement kann der optische Spalt von dem Aktuierungsspalt räumlich getrennt werden.

Besonders vorteilhaft ist eine Ausführungsform des hier vorgestellten Ansatzes, bei der die erste Aktuierungselektrode an oder in dem ersten Spiegelelement definiert, angeordnet und/oder anordenbar ist. Eine solche Ausführungsform bietet den Vorteil, dass dadurch bei Anlegen einer elektrischen Spannung an das Elektrodenpaar der optische Spalt vergrößert werden kann, sodass die Gefahr eines Zusammenschnappens der beiden Spiegelelemente während der Aktuation reduziert wird.

Gemäß einer Ausführungsform kann das Halteelement ein Substrat oder, zusätzlich oder alternativ, eine Kappe aufweisen, wobei das Halteelement ferner eine Zusatzschicht umfasst, in welcher die Aktuierungsausnehmung ausgebildet ist. Dadurch kann ein Aktuierungsspaltje nach Ausführungsform mithilfe einer Substratlage oder Kappe gebildet werden. Zugleich ermöglicht die Verwendung der Zusatzschicht, die beispielsweise auf oder an dem Substrat oder der Kappe aufgebracht ist, eine flexible und technisch einfache Ausbildung der Aktuierungsausnehmung in dem Halteelement.

Gemäß einer weiteren Ausführungsform kann das erste Spiegelelement zumindest einen Anschlag zum Verhindern eines Verbindens, insbesondere infolge eines Anschlagens, des ersten Spiegelelements an die Aktuierungsausnehmung und/oder an das zweite Spiegelelement aufweisen. Zusätzlich oder alternativ kann das zweite Spiegelelement zumindest einen Anschlag zum Verhindern eines Verbindens, insbesondere nach einem Anschlagen des zweiten Spiegelelements an das erste Spiegelelement aufweisen. Unter einem Verbinden kann vorliegend beispielsweise ein dauerhaftes Verbinden, beispielsweise ein stoffschlüssiges Verbinden wie ein Kleben, verstanden werden. Unter einem Anschlag kann beispielsweise eine Anschlagnoppe oder ein Anschlagstift verstanden werden. Dadurch können großflächige Berührungen und ein Verbinden/Verkleben zwischen dem ersten Spiegelelement und der gegenüberliegenden Begrenzung der Aktuierungsausnehmung bzw. zwischen dem ersten Spiegelelement und dem zweiten Spiegelelement verhindert werden.

Das Interferometer enthält des Weiteren ein Zusatzelektrodenpaar aus einer ersten Zusatzaktuierungselektrode, die an oder in dem ersten Spiegelelement definiert oder einer dem zweiten Spiegelelement gegenüberliegenden Seite des ersten Spiegelelements angeordnet oder anordenbar ist, und einer zweiten Zusatzaktuierungselektrode, die an einer der ersten Zusatzaktuierungselektrode gegenüberliegenden Seite des zweiten Spiegelelements angeordnet oder anordenbar ist, aufweisen. Dabei ist der Spiegelabstand durch Anlegen einer elektrischen Spannung an das Zusatzelektrodenpaar änderbar sein. Dadurch wird eine bidirektionale Änderung des Spiegelabstands ermöglicht.

Ferner weist das Interferometer ein Kappenelement auf, das dem zweiten Spiegelelement in einem Kappenabstand gegenüberliegend angeordnet oder anordenbar ist, um einen (weiteren) Aktuierungsspalt zu bilden, wobei der (weitere) Aktuierungsspalt durch das zweite Spiegelelement vom optischen Spalt räumlich getrennt ist. Dabei weist das Interferometer ein weiteres Elektrodenpaar aus einer ersten weiteren Aktuierungselektrode, die an einer dem Kappenelement gegenüberliegenden Seite des zweiten Spiegelelements angeordnet oder anordenbar ist, und einer zweiten weiteren Aktuierungselektrode, die an einer der ersten weiteren Aktuierungselektrode gegenüberliegenden Seite des Kappenelements angeordnet oder anordenbar ist, auf. Der Kappenabstand, welcher den Abstand des zweiten Spiegelelements von der Kappe bezeichnet, ist durch Anlegen einer elektrischen Spannung an das weitere Aktuierungselektrodenpaar änderbar.

Dadurch kann der maximal einstellbare Abstand der Spiegelelemente weiter vergrößert werden. Insbesondere kann das Kappenelement eine Antireflexbeschichtung besitzen und dadurch eine geringere Reflektanz und/oder höhere Transmittanz als ein unbeschichtetes Kappenelement des gleichen Materials besitzen.

Gemäß einer Ausführungsform kann das Kappenelement als transparentes Substrat, insbesondere ein Glaswafer (Borosilicatglas oder alkalifreies Glas oder Kalk-Natron-Glas) bzw. Quarzwafer, ausgeführt sein. Dadurch kann ein besonders breitbandiges Interferometer realisiert werden, das sich auch für Wellenlängen unter 1100 nm eignet, genauer gesagt, Wellenlängen, die einer Photonenenergie oberhalb der Bandlücke des Substratmaterials entsprechen.

Gemäß einer weiteren Ausführungsform kann das Interferometer zumindest einen zusätzlichen Kappenwafer aufweisen, der auf einer dem Kappenelement gegenüberliegenden Seite des Halteelements angeordnet sein kann, um das Interferometer beidseitig zu verkappen. Dadurch kann das Interferometer vor Stör- oder Umwelteinflüssen geschützt werden.

Dabei ist es vorteilhaft, wenn der zusätzliche Kappenwafer als Glaswafer und/oder Quarzwafer ausgeführt ist, beispielsweise ähnlich dem vorgenannten Kappenelement. Auch durch diese Ausführungsform kann ein besonders breitbandiges Interferometer realisiert werden.

Gemäß einer weiteren Ausführungsform kann das Interferometer zumindest ein Messelektrodenpaar zum Messen des Spiegelabstands aufweisen. Das Messelektrodenpaar kann beispielsweise zumindest zwei einander gegenüberliegend angeordnete Messelektroden aufweisen. Bei den Messelektroden kann es sich je nach Ausführungsform um die Aktuierungselektroden oder um zusätzliche Elektroden handeln. Dadurch kann der Spiegelabstand präzise (beispielsweise auch indirekt) gemessen werden, mindestens aber dessen Änderung mittels einer indirekten Messung.

Gemäß einer weiteren Ausführungsform kann das Halteelement eine dem ersten Spiegelelement gegenüberliegende Durchgangsöffnung aufweisen. Dadurch kann das Interferometer in einem spektralen Bereich betrieben werden, in dem das Halteelement absorbierend ist. Ferner können dadurch Reflexionen im optischen Pfad des Interferometers reduziert werden.

Der hier vorgestellte Ansatz schafft zudem ein Verfahren zum Herstellen eines Interferometers mit den Schritten nach Anspruch 10.

Der hier vorgestellte Ansatz schafft ferner eine Vorrichtung, mit Einheiten, die ausgebildet sind, das Interferometer (100) nach Anspruch 1 herzustellen und einer Recheneinheit, die diese Einheiten so steuert, dass die Schritte des Verfahrens nach Anspruch 10 ausgeführt werden.

Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach Anspruch 10 verwendet wird, wenn das Programmprodukt oder Programm auf der Recheneinheit einer Vorrichtung nach Anspruch 11 ausgeführt wird.

Ausführungsbeispiele der Erfindung sind in den Zeichnungen dargestellt und in der nachfolgenden Beschreibung näher erläutert. Es zeigt:

Fig. 1 eine schematische Darstellung eines Interferometers;

Fig. 2 eine schematische Darstellung eines Interferometers;

Fig. 3 eine schematische Darstellung eines Interferometers;

Fig. 4 eine schematische Darstellung eines Interferometers;

Fig. 5 eine schematische Darstellung eines Interferometers gemäß einem Ausführungsbeispiel;

Fig. 6 eine schematische Darstellung eines Interferometers;

Fig. 7 eine schematische Darstellung eines Interferometers;

Fig. 8 eine schematische Darstellung eines Interferometers;

Fig. 9 ein Ablaufdiagramm eines Verfahrens;

Fig. 10 ein Blockschaltbild einer Vorrichtung;

Fig. 11 eine schematische Darstellung eines Interferometers.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

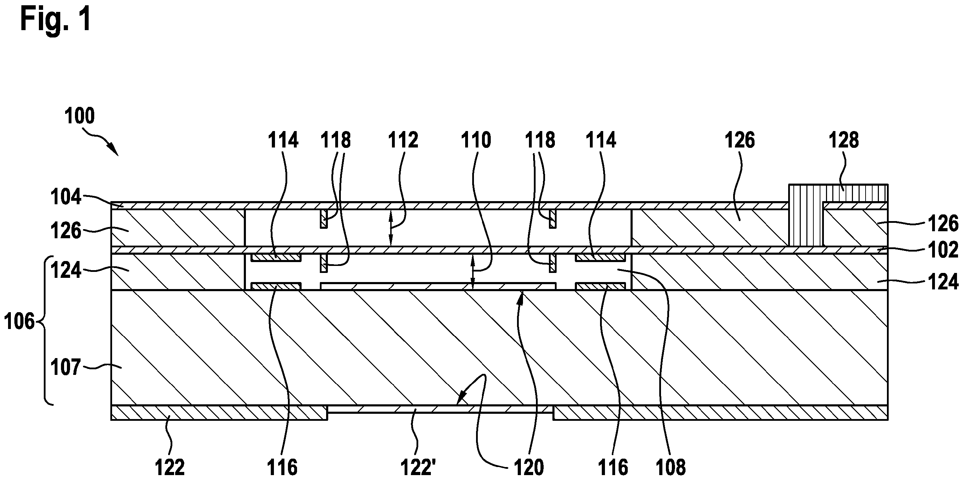

Fig. 1 zeigt eine schematische Darstellung eines Interferometers 100.

Das Interferometer 100 umfasst ein erstes Spiegelelement 102 und ein gegenüber dem ersten Spiegelelement 102 in einem änderbaren Spiegelabstand angeordnetes zweites Spiegelelement 104. Das erste Spiegelelement 102, hier beispielhaft ein unterer Spiegel, ist an einem Halteelement 106, das hier beispielhaft auf einem Substrat(wafer) 107 sowie einer nachfolgend noch näher beschriebenen Zusatzschicht basiert, gegenüber einer Aktuierungsausnehmung 108 des Halteelements 106 angeordnet und begrenzt mit diesem einen Aktuierungsspalt 110. Beispielhaft gezeigt ist ein Querschnitt durch ein Fabry-Pérot-Interferometer, bei dem die Aktuierung über den Aktuierungsspalt 110 elektrostatisch erfolgt, wobei ein Anfangsabstand des Aktuierungsspaltes 110 unabhängig vom Spiegelabstand einstellbar ist. Das zweite Spiegelelement 104, hier beispielhaft ein oberer Spiegel, begrenzt zusammen mit dem ersten Spiegelelement 102 einen optischen Spalt 112, der dem Spiegelabstand entspricht, wobei das erste Spiegelelement 102 zwischen dem Halteelement 106 und dem zweiten Spiegelelement 104 angeordnet ist, d. h., die beiden Spiegelelemente 102, 104 sind auf einer gemeinsamen Seite des Halteelements 106 angeordnet. Der optische Spalt 112 ist durch das erste Spiegelelement 102 vom Aktuierungsspalt 110 bzw. der Aktuierungsausnehmung 108 räumlich getrennt.

Zur Änderung des Spiegelabstands weist das Interferometer 100 ein Elektrodenpaar aus einer ersten Aktuierungselektrode 114 und einer zweiten Aktuierungselektrode 116 auf. Die erste Aktuierungselektrode 114 ist an einer der Aktuierungsausnehmung 108 zugewandte Seite des ersten Spiegelelements 102 angeordnet, während die zweite Aktuierungselektrode 116 an einer der ersten Aktuierungselektrode 114 gegenüberliegenden Seite der Aktuierungsausnehmung 108 angeordnet ist. Vorteilhafterweise können eine oder mehrere der Aktuierungselektroden 114, 116 ringförmig ausgeführt sein. Der Spiegelabstand ist durch Anlegen einer geeigneten Aktuierungsspannung an das Elektrodenpaar änderbar. Ebenso denkbar ist eine Integration der ersten Aktuierungselektrode 114 in das erste Spiegelelement 102 selbst (d. h. einer Definition der ersten Aktuierungselektrode 114 in dem ersten Spiegelelement 102), beispielsweise durch eine lokale Dotierung. In einem Ausführungsbeispiel kann auch diese erste Aktuierungselektrode 114 im einfachsten Fall flächig ausgeführt werden und sich die Aktuation durch die beispielsweise ringförmige Gegenelektrode ergeben.

Eingezeichnet sind in der Fig. 1 ferner optionale Anschlagnoppen 118 (welche auch als Anschlag bezeichnet werden können), eine optionale Antireflexionsschicht 120 auf beiden Seiten des Halteelements 106, genauer des Substrats 107, im Bereich einer optischen Apertur, eine im relevanten Wellenlängenbereich reflektierende und/oder absorbierende Schicht als Aperturblende 122 zur Bildung einer optischen Apertur 122', eine erste Opferschicht 124 (als Zusatzschicht zur Ausbildung der Aktuierungsausnehmung hierin) und eine zweite Opferschicht 126 (als weitere Zusatzschicht zur Halterung des zweiten Spiegelelementes 104 und zur Ausbildung des optischen Spalts 112 hierin). Beispielsweise kann die erste Opferschicht 124 und/oder die zweite Opferschicht 126, die hier als Zusatzschicht bzw. weitere Zusatzschicht verwendet wird, besonders günstige Ätzeigenschaften in Bezug auf das Substrat 107 und die Spiegelelemente haben, sodass sich die Aktuierungsausnehmung 108 besonders einfach in dieser Zusatzschicht ausbilden lässt. Dabei ist das erste Spiegelelement 102 zwischen der ersten Opferschicht 124 und der zweiten Opferschicht 126 angeordnet, während das zweite Spiegelelement 104 auf der zweiten Opferschicht 126 angeordnet ist, wobei die zweite Opferschicht 126 zwischen dem ersten Spiegelelement 102 und dem zweiten Spiegelelement 104 angeordnet ist. Beispielhaft erfolgt die elektrische Kontaktierung des Elektrodenpaars mittels eines Kontaktelements 128, das zumindest durch die zweite Opferschicht 126 hindurchreicht. Es handelt sich hierbei um eine vereinfachte Darstellung, die den Fall einer unidirektionalen Aktuierung zeigt.

Das Fabry-Pérot-Interferometer 100 umfasst zwei zueinander beabstandete Spiegelelemente 102, 104, die auf ein Halteelement 106 auf der Basis eines Substrats 107 abgestützt sind, wobei mindestens eines der Spiegelelemente beweglich ist, die Bewegung mittels Aktuierung induzierbar ist, die Aktuierung elektrostatisch ist, durch die Aktuierung der Spiegelabstand variierbar ist und die Variation eine aktive Vergrößerung des Spiegelabstands beinhaltet.

Je nach Ausführung sind die Spiegelelemente 102, 104 als DBR-Membranspiegel (DBR=distributed Bragg reflector) oder als mechanische Trägermembran mit Spiegelschicht realisiert. Die Membranspiegel besitzen bevorzugt eine tensile Vorspannung. Die Beabstandung sowohl der Spiegelelemente zueinander als auch der Spiegelelemente zum Substrat erfolgt etwa mittels einer oberflächenmikromechanischen Opferschicht, wie beispielsweise der ersten Opferschicht 124 und/oder der zweiten Opferschicht 126. Die Opferschicht ist beispielsweise mittels eines Ätzprozesses mindestens im optisch freien Bereich der optischen Apertur 122' entfernt, sodass die Spiegelelemente 102, 104 freigestellt sind. Auf mindestens einer Membran und dem Substrat 107 oder mindestens einer Membran und/oder einer nachfolgend noch näher beschriebenen Kappe ist eine Elektrode angeordnet, die je nach Ausführungsbeispiel ein lokal dotiertes Halbleitermaterial aufweist oder metallisch ist. Die Spiegelelemente 102, 104 sind beispielsweise als Bragg-Spiegel aus dielektrischen bzw. Schichten, die in einem Wellenlängenbereich keine bzw. eine geringe Absorption aufweisen, beispielsweise Si, Ge, SiN, SiO$_2$, SiCN, TiO$_x$ oder SiC oder als Trägermembran mit Metallspiegel (mit Schutzschichten aus einem der vorhergehenden Materialien), etwa aus Ag, Cu, Al oder Au, ausgeführt. Eine aktive Positionsdetektion ist beispielsweise mittels kapazitiver oder piezoresistiver Detektion durchführbar. Der MEMS-Wafer ist optional ein- oder doppelseitig verkappt, etwa mit einer Siliziumwafer- oder Glaswaferkappe.

Ein grundlegendes Problem elektrostatischer Feder-Aktorsysteme ist das sogenannte Pull-in-Phänomen, bei dem zwischen zwei Aktuierungselektroden kein stabiler Abstand mehr eingestellt werden kann, sobald ein kritischer Verfahrweg überschritten wird. Der Grund hierfür ist die überlineare Zunahme der elektrostatischen Kraft mit dem Verfahrweg im Vergleich zur linearen Zunahme der Federkraft, die als Rückstellkraft agiert. Die Kraft, die durch einen elektrostatischen Aktor ausgeübt wird, ist gegeben durch

$$F_{el} = -\frac{1}{2}\frac{dC}{dx}U^2 .$$

Damit hängt die Kraft von der Änderung der Kapazität C mit dem Verfahrweg x und der angelegten Spannung U ab. Für einen Plattenkondensator gilt für die Kapazität:

$$C(x) = \varepsilon_0 \frac{A}{d_0 - x},$$

wobei $d_0$ den Spaltabstand des elektrostatischen Aktors in Ruhelage und A dessen Fläche bezeichnet. Als vereinfachte Geometrie wird hierbei ein Plattenkondensator angenommen, der an einer Feder aufgehängt ist. Diese Näherung kann in den meisten Anwendungen auch getroffen werden, da sich viele reale Systeme auf dieses idealisierte Grundsystem zurückführen lassen.

Des Weiteren dient dieses vereinfachte Modellsystem lediglich zur Veranschaulichung des zugrundeliegenden Problems. Für eine Feder der Federhärte k ergibt sich dann eine Rückstellkraft von

$$F_F = -kx$$

bei einem Verfahrweg x. Da eine Auslenkung des Aktors den elektrostatischen Spalt verkleinert, nimmt ebenfalls die elektrostatische Kraft mit steigender Auslenkung zu, sogar überlinear. Daher gibt es eine kritische Auslenkung $x_{PI}$, bei der die Federkraft die elektrostatische Kraft nicht mehr kompensieren kann und bei der es keine stabile Gleichgewichtslage gibt. Dieser Punkt wird im Allgemeinen als Pull-in- oder Snap-in-Punkt bezeichnet und liegt unabhängig von der Federhärte k und der Elektrodenfläche immer bei einem Drittel des Spaltabstands $d_0/3$ und tritt bei einer Spannung $U_{PI}$ auf, die für das vereinfachte System durch folgenden Zusammenhang gegeben ist:

$$U_{PI} = \sqrt{\frac{8}{27}\frac{kd_0^3}{\varepsilon_0 A}}.$$

Hierbei bezeichnen die Variablen die bereits eingeführten Größen. Dieses Phänomen stellt eine fundamentale Limitierung des elektrostatisch aktuierbaren Verfahrwegs dar. Um ein Fabry-Pérot-Interferometer mit möglichst großem spektralem Arbeitsbereich zu realisieren, ist es nötig, Umgehungslösungen zu finden, da unter anderem der maximale Verfahrweg der Spiegel zueinander auch den maximal durchstimmbaren Spektralbereich bestimmt. Das Problem an bisher realisierten Fabry-Pérot-Interferometern kann darin gesehen werden, dass der optische Spalt und der Aktuationsspalt übereinstimmen, was aufgrund des Pull-in die Durchstimmbarkeit limitiert. Der hier vorgestellte Ansatz umgeht diese Problematik durch die räumliche Separation genau dieser beiden Spalte.

Gemäß einem Ausführungsbeispiel sind die Spiegelelemente 102, 104 als tensil verspannte Membranen ausgeführt. Diese werden über einer freien Fläche aufgespannt und definieren auf diese Weise die notwendige Feder. Die tensile Vorspannung ist vorteilhaft, um einen gravitationsbedingten Durchhang der Membranen zu reduzieren sowie um die Eigenfrequenz des Federsystems zu erhöhen, wodurch eine höhere Robustheit gegenüber der Einkopplung externer Vibrationen besteht. Als Material für die Membranspiegel sind sowohl dielektrische bzw. nicht-absorbierende Schichtsysteme, sogenannte Bragg-Reflektoren, als auch metallische Spiegel auf Trägerstrukturen oder nanostrukturierte plasmonische Spiegelstrukturen verwendbar. Der mechanische Vorteil dieser Systeme ist eine hohe Eigenfrequenz aufgrund der geringen Masse und damit verbunden eine sehr geringe Lageempfindlichkeit der Membranspiegel verglichen mit Spiegelschichten, die auf massiven Trägerstrukturen aufgebracht sind. Gleichzeitig wird die hohe Eigenfrequenz bei einer verhältnismäßig geringen Federsteifigkeit erzielt, die durch einen definierten Schichtstress auch einstellbar ist. Ein weiterer Vorteil des hier beschriebenen Ansatzes im Vergleich zu anderen membranbasierten Fabry-Pérot-Interferometern ist die Realisierung eines mechanisch symmetrischen Systems aus zwei mechanisch gleichartigen Spiegeln, das eine zusätzliche Unempfindlichkeit gegenüber externen Störungen wie beispielsweise Vibrationen aufweist. Des Weiteren erlaubt die Auslegung des Fabry-Pérot-Interferometers 100 mit zwei beweglichen Membranen zusätzlich eine bidirektionale Aktuation, beispielsweise durch eine Anziehung der beiden Membranen durch die Wahl geeigneter Potenziale. Voraussetzung hierfür ist die Definition geeigneter Elektroden auf bzw. in den Spiegelschichten. Eine solche Aktuation ist vorteilhaft, da sie bei der gleichen maximalen Spannung einen vergrößerten maximal einstellbaren Abstand der Spiegelelemente voneinander ermöglicht.

Für die Operation eines Fabry-Pérot-Interferometers ist es weiterhin vorteilhaft, wenn beide Spiegelelemente 102, 104 die gleiche spektrale Reflexionscharakteristik besitzen. Ansonsten kann keine maximale Transmission bei der Durchlasswellenlänge erreicht werden, was sich in einem Signalverlust äußert. Für Fabry-Pérot-Interferometer bestehend aus einem Membranspiegel und einem Spiegel auf einem festen Substrat ist das über einen großen Spektralbereich nur schwer zu erreichen, da die beiden Spiegel nicht identisch sind, denn der Membranspiegel wird auf beiden Seiten von Luft begrenzt und der Substratspiegel wird auf einer Seite von dem Substrat begrenzt. Gemäß dem hier vorgestellten Ansatz werden automatisch beide Spiegelelemente 102, 104 als Membran ausgeführt, sodass diese sehr einfach gleichartig hergestellt werden können und somit die gleiche Reflexionscharakteristik besitzen.

Die zwei reflektiven Membranen besitzen einen definierten Abstand zueinander und sind mit einem Substratmaterial verbunden. Die Reflektivität der Membranen ist beispielsweise durch metallische Schichten auf Trägerstrukturen oder einen Bragg-Spiegel realisiert. Die Membranen sind durch geeignete Opferschichtprozesse in einem definierten Bereich in einer zur Ebene der Membranen senkrechten Richtung beweglich hergestellt worden. Vorteilhaft ist eine möglichst hohe Parallelität bzw. Planparallelität der Membranen, die beispielsweise mittels geeigneter tensiler mechanischer Vorspannung der Membranschichten erreicht werden kann. Mindestens eine der beiden Membranen kann durch Anlegen einer elektrischen Spannung bewegt werden, wodurch der Abstand der beiden reflektiven Membranen oder Spiegel verändert wird. Dadurch kann die Durchlasswellenlänge des damit gebildeten Fabry-Pérot-Interferometers kontrolliert werden. Zur Realisierung dieser Bewegung befinden sich auf mindestens einer der Membranen Aktuierungselektroden 114. Außerdem befinden sich weitere dazu passende Aktuierungselektroden 116 in mindestens einer Ebene oberhalb oder unterhalb der beiden Spiegelmembranen 102, 104. Die Herstellung der Aktuierungselektroden 114, 116 erfolgt beispielsweise durch Abscheidung und eventuelle Strukturierung einer leitfähigen Schicht oder durch gezielte Dotierung eines Halbleitermaterials.

In Fig. 1 ist beispielhaft ein Interferometer gezeigt, bei dem sich Aktuierungselektroden auf dem unteren Spiegel 102 und auf dem Substratwafer 107 befinden. Zwischen beiden Ebenen wird durch einen geeigneten Opferschichtprozess eine Aktuierungsausnehmung 108 realisiert. Durch Anlegen einer Spannung zwischen dem Elektrodenpaar 114, 116 wird das erste Spiegelelement 102 zum Halteelement 106 bzw. Substrat 107 hingezogen, wodurch sich der Abstand der beiden Spiegelelemente 102, 104 voneinander vergrößert. Entscheidender Vorteil dieser Ausführung ist, dass der initiale Abstand der Elektrodenpaare 114, 116 weitgehend unabhängig vom initialen Abstand der beiden Spiegelmembranen 102, 104 einstellbar ist und der Verfahrweg damit bei genügend großem Elektrodenabstand nicht auf ein Drittel des initialen optischen Spiegelabstands durch Pull-in begrenzt ist.

Optional sind als Anschlag 118 fungierende Noppen hinzugefügt, die die Auslenkung der Membranen 102, 104 begrenzen und bei Berührungen dazu beitragen, dass sich die Strukturen leichter wieder voneinander lösen, da die Kontaktfläche klein gehalten wird. Vorteilhaft sind auch Antireflexionsschichten 120 auf allen Grenzflächen im optischen Pfad, die nicht Teil der Spiegel 102, 104 sind. Von Vorteil ist auch die Nutzung der optischen Apertur 122', um durch Reflexion und/oder Absorption den optischen Lichtpfad und den Einfallswinkel zu begrenzen.

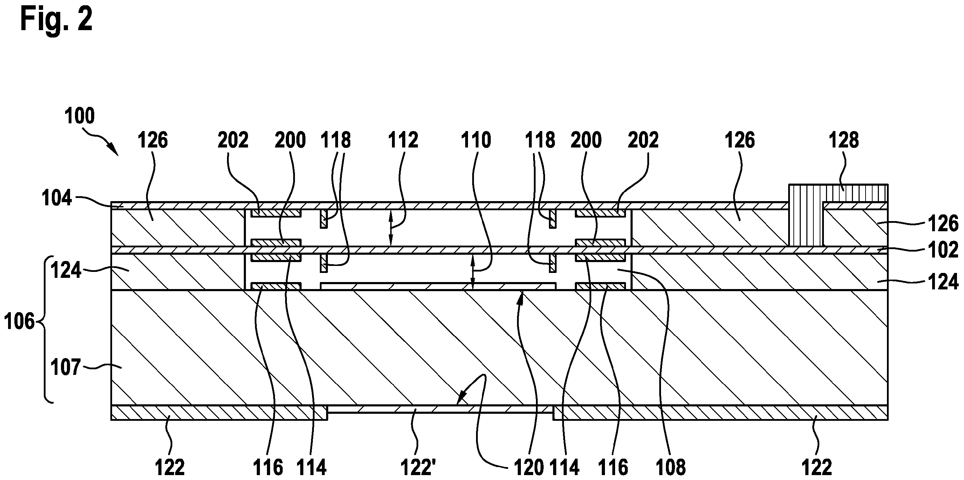

Fig. 2 zeigt eine schematische Darstellung eines Interferometers 100.

Im Unterschied zu Fig. 1 weist das Interferometer 100 ein Zusatzelektrodenpaar aus einer ersten Zusatzaktuierungselektrode 200 und einer zweiten Zusatzaktuierungselektrode 202 auf. Dabei ist die erste Zusatzaktuierungselektrode 200 an einer dem zweiten Spiegelelement 104 gegenüberliegenden Seite des ersten Spiegelelements 102 angeordnet, während die zweite Zusatzaktuierungselektrode 202 an einer der ersten Zusatzaktuierungselektrode 200 gegenüberliegenden Seite des zweiten Spiegelelements 104 angeordnet ist. Somit wird zusätzlich eine Aktuierung zwischen den Spiegelelementen 102, 104 möglich. Die Darstellung der elektrischen Kontaktierung ist hier stark vereinfacht dargestellt. Beispielsweise sind keine unterschiedlichen Kontakte für die verschiedenen Elektroden in der Figur dargestellt. Ebenso denkbar ist ein Ausführungsbeispiel, bei der die die Elektroden 114 und 200 identisch sind, was typischerweise bei einer Realisierung über die Dotierung der Fall ist.

Mit anderen Worten ausgedrückt zeigt Fig. 2 ein Interferometer, bei dem sich auch zwischen den Spiegelelementen 102, 104 Elektroden 200, 202 befinden. Dadurch ist zusätzlich eine Verkleinerung des initialen Spiegelabstands möglich. Außerdem sind bei gleichem Verfahrweg der Spiegelelemente 102, 104 die dafür notwendigen elektrischen Spannungen reduziert.

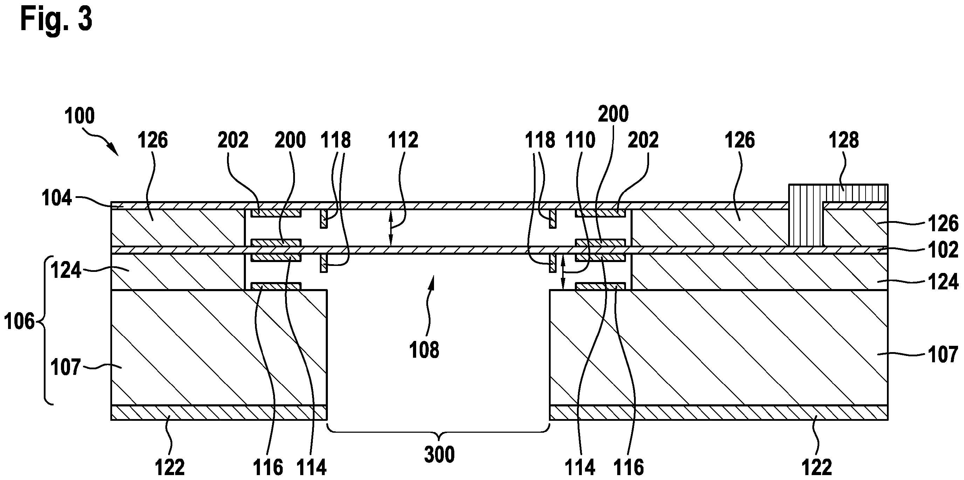

Fig. 3 zeigt eine schematische Darstellung eines Interferometers 100.

Im Unterschied zu Fig. 2 weist das Interferometer 100 im Bereich der Aktuierungsausnehmung 108 eine Durchgangsöffnung 300 im Substrat 107 auf. Hierzu wurde beispielsweise Substratmaterial im optischen Pfad entfernt. Dadurch ist das Fabry-Pérot-Interferometer 100 auch in einem spektralen Bereich betreibbar, in dem das Substrat 107 absorbierend ist. Außerdem wird die gesamte Transmission des Fabry-Pérot-Interferometers 100 durch den Wegfall von Reflexionen an weiteren Grenzflächen im optischen Pfad erhöht.

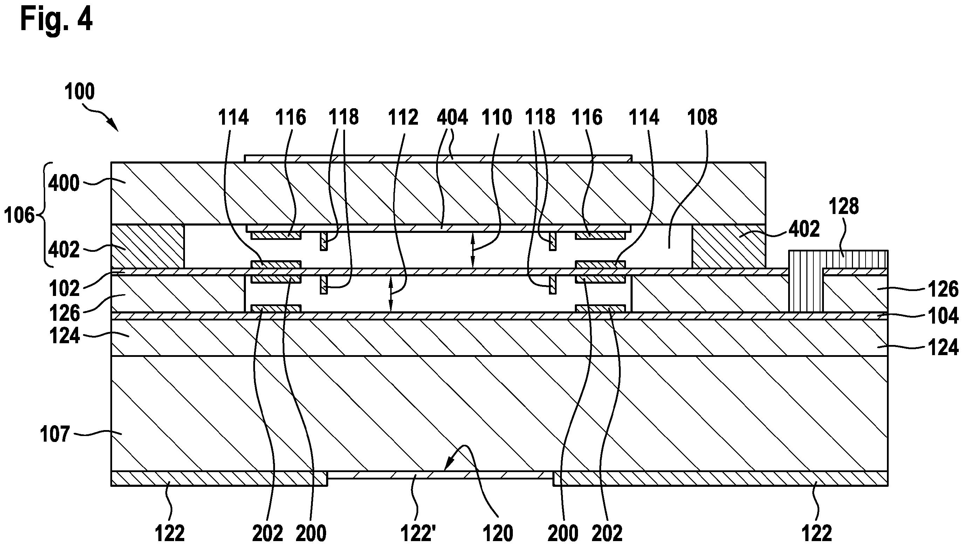

Fig. 4 zeigt eine schematische Darstellung eines Interferometers 100.

Das Interferometer 100 entspricht im Wesentlichen dem vorangehend anhand der Figuren 1 bis 3 beschriebenen Interferometer. Gezeigt ist ein Interferometer, bei dem eine Aktuierung zwischen dem ersten Spiegelelement 102 und einem zusätzlichen Kappenwafer bzw. einer Kappe 400 als Basis des Halteelements 106 möglich ist. Dabei ist das erste Spiegelelement 102 zwischen dem Kappenwafer bzw. der Kappe 400 und einem Substrat(wafer) 107 samt erster Opferschicht 124 angeordnet, auf den das zweite Spiegelelement 104 aufgebracht ist. Eingezeichnet sind ferner eine optionale Waferbond-Verbindung 402 (hier nun beispielsweise als Zusatzschicht der Kappe 400 zur Bildung des Halteelementes 106) und eine optionale Kappenantireflexionsschicht 404, die auf einer dem Aktuierungsspalt 110 abgewandten und/oder der zugewandten Seite des Kappenwafers bzw. der Kappe 400 aufgebracht ist.

Zusätzlich zu einer Aktuierung zwischen einem ersten Spiegelelement und Halteelement bzw. Substrat ist auch eine Realisierung denkbar, bei der Elektroden auf einem zusätzlichen Kappenwafer bzw. der Kappe 400 eine Bewegung des oberen Spiegels nach oben hin ermöglichen, wodurch ebenfalls der Spiegelabstand vergrößert wird. Wie in Fig. 4 erkennbar, ist der Abstand des Elektrodenpaars hier durch die Waferbond-Verbindung 402 eingestellt. Durch die Kappe 400 ist zusätzlich der Einschluss eines definierten Druckes möglich. Zudem schützt die Kappe 400 des Halteelements 106 das Fabry-Pérot-Interferometer 100 vor äußeren Einflüssen wie Feuchtigkeit und Verunreinigungen. Der Kappenwafer bzw. die Kappe 400 ist beispielsweise aus Silizium oder Glas gefertigt.

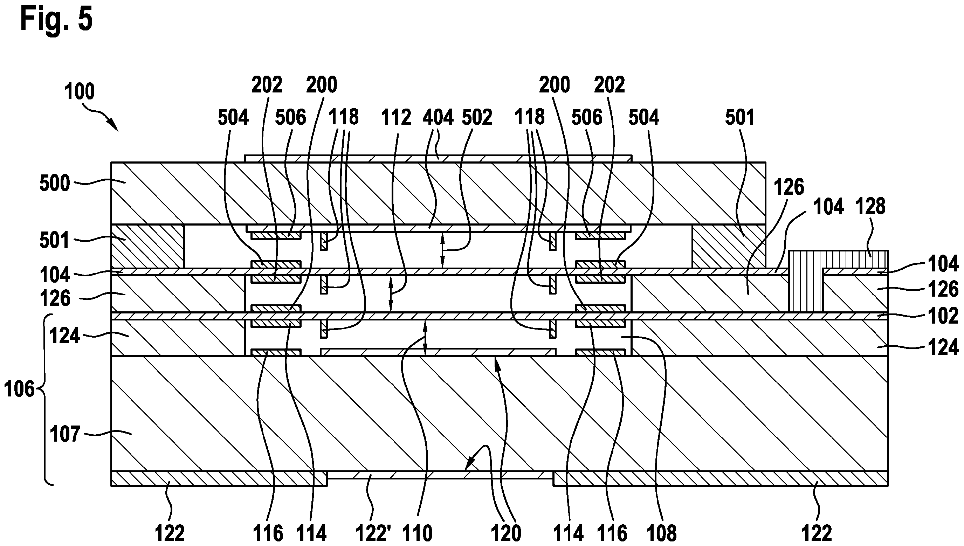

Fig. 5 zeigt eine schematische Darstellung eines Interferometers 100 gemäß eines Ausführungsbeispiels nach Anspruch 1.

Das Interferometer 100 umfasst gemäß diesem Ausführungsbeispiel ein Kappenelement 500 ähnlich dem vorangehend anhand von Fig. 4 beschriebenen Kappenwafer 400. Das Kappenelement 500 ist über eine Waferbond-Verbindung 501 dem zweiten Spiegelelement 104 in einem Kappenabstand gegenüberliegend angeordnet und begrenzt mit diesem einen weiteren Aktuierungsspalt 502, der durch das zweite Spiegelelement 104 vom optischen Spalt 112 räumlich getrennt ist. Zusätzlich umfasst das Interferometer 100 ein weiteres Elektrodenpaar aus einer ersten weiteren Aktuierungselektrode 504, die an einer dem Kappenelement 500 gegenüberliegenden Seite des zweiten Spiegelelements 104 angeordnet ist, und einer zweiten weiteren Aktuierungselektrode 506, die an einer der ersten weiteren Aktuierungselektrode 504 gegenüberliegenden Seite des Kappenelements 500 angeordnet ist. Auch hier ist ein Ausführungsbeispiel denkbar, bei dem die Integration der Elektrode bzw. dadurch ein Zusammenfallen zweier Elektroden möglich ist, wie es beispielsweise durch eine Dotierung der Fall wäre. Der Kappenabstand ist durch Anlegen einer geeigneten Aktuierungsspannung an das weitere Elektrodenpaar änderbar. Die beiden Spiegelemente 102, 104 sind somit durch Anlegen der passenden elektrischen Spannungen in beide Richtungen bewegbar. Die für vergleichbare Änderungen des Spiegelabstands erforderlichen elektrischen Spannungen können hier aufgrund der bidirektionalen Aktuierung weiter reduziert werden.

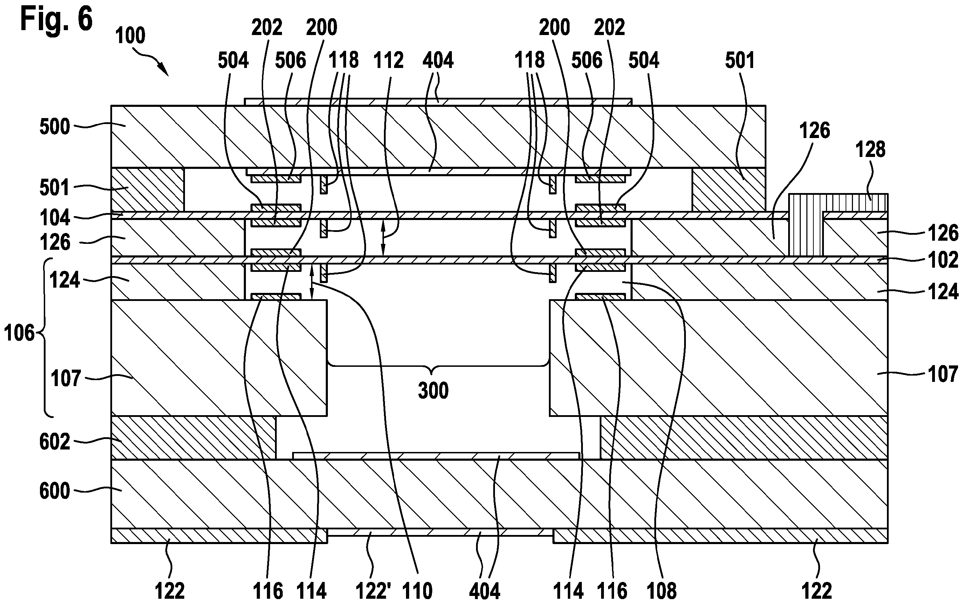

Fig. 6 zeigt eine schematische Darstellung eines Interferometers 100.

Im Unterschied zu Fig. 5 weist das Interferometer 100 gemäß diesem Ausführungsbeispiel die Durchgangsöffnung 300 aus Fig. 3 sowie einen zusätzlichen Kappenwafer 600 auf, der die Durchgangsöffnung 300 auf einer dem ersten Spiegelelement 102 gegenüberliegenden Seite des Halteelements 106 bzw. Substrats 107 abdeckt, sodass die Durchgangsöffnung 300 einerseits vom ersten Spiegelelement 102, andererseits vom zusätzlichen Kappenwafer 600 abgedeckt ist. Beispielsweise ist der zusätzliche Kappenwafer 600 mittels einer zusätzlichen Waferbond-Verbindung 602 am Halteelement 106 angebracht.

Wenn der obere Kappenwafer 500 in Kombination mit der Durchgangsöffnung 300 im Substratmaterial genutzt wird, kann die zusätzliche Verbindung mit dem zweiten Kappenwafer 600 auf der Rückseite sinnvoll sein, um weiterhin eine Verkapselung des Fabry-Pérot-Interferometers 100 und eine Stabilisation des Bauteils zu erreichen. Auch hier sind auf den Kappenwafern 500, 600 optional Antireflexionsschichten 404 und optische Aperturen aufgebracht.

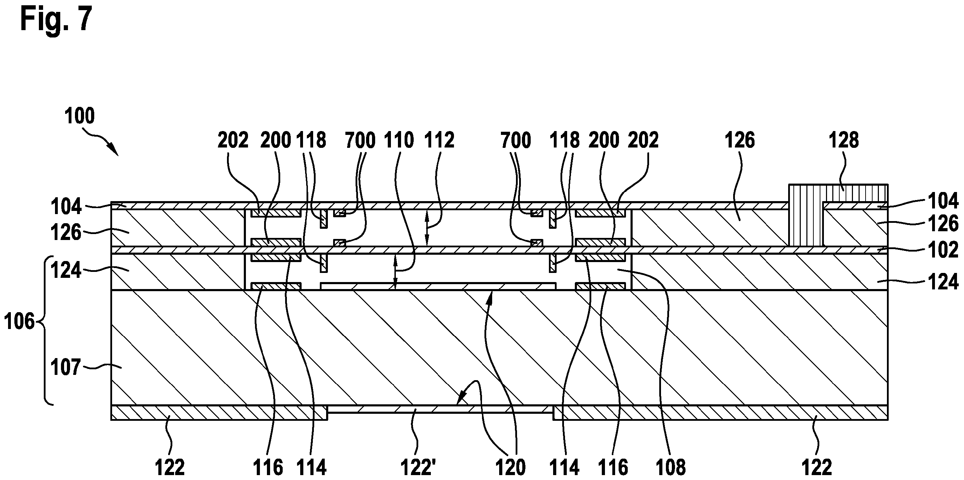

Fig. 7 zeigt eine schematische Darstellung eines Interferometers.

Das Interferometer 100 ähnelt stark dem vorangehend anhand von Fig. 2 beschriebenen Interferometer.

Im Unterschied zu Fig. 2 weist das Interferometer 100 gemäß Fig. 7 jedoch ein Messelektrodenpaar aus Messelektroden 700 auf, die je im optischen Spalt 112 angeordnet und ausgebildet sind, um den Spiegelabstand beispielsweise kapazitiv zu messen. Damit ist eine Positionskontrolle in das Interferometer 100 integrierbar.

Alternativ sind die Aktuierungselektroden für diese Messung nutzbar. Die kapazitive Abstandsmessung erfolgt optional mit mehr als zwei Elektrodenpaaren, um beispielsweise eine differenziell-kapazitive Auswertung zu realisieren.

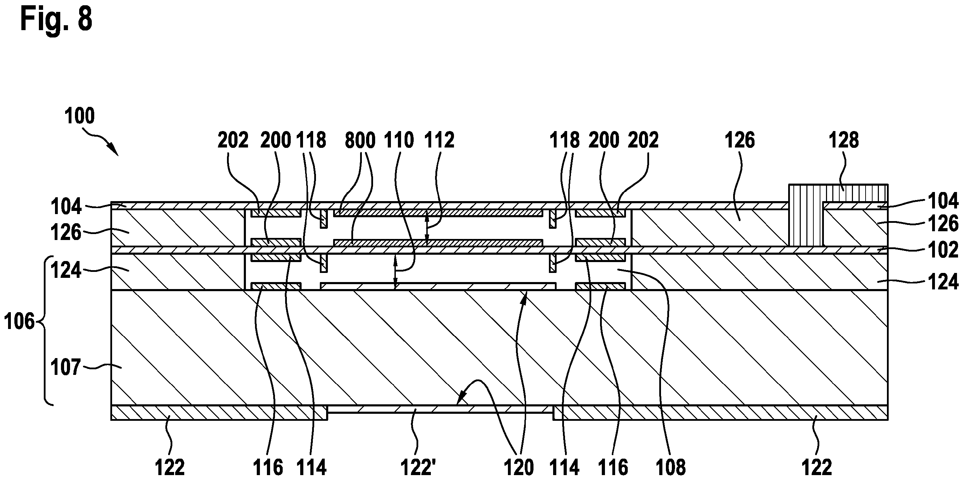

Fig. 8 zeigt eine schematische Darstellung eines Interferometers 100.

Das Interferometer 100 ist ähnlich dem vorangehend anhand von Fig. 2 beschriebenen Interferometer aufgebaut. Im Unterschied dazu weist das Interferometer 100 gemäß Fig. 8 jedoch zusätzliche Elektroden 800 auf, die im optischen Pfad des Interferometers 100 integriert sind. Beispielhaft sind die zusätzlichen Elektroden 800 einander gegenüberliegend und mittig im optischen Spalt 112 angeordnet.

Die Verwölbung der Membranen 102, 104 im optischen Bereich wird minimiert, indem elektrostatische Kräfte in dieser Region durch die zusätzlichen Elektroden 800 mit gleichem elektrostatischem Potenzial verhindert werden, was sich vorteilhaft auf die erreichbare spektrale Auflösung des Fabry-Pérot-Interferometers 100 auswirkt.

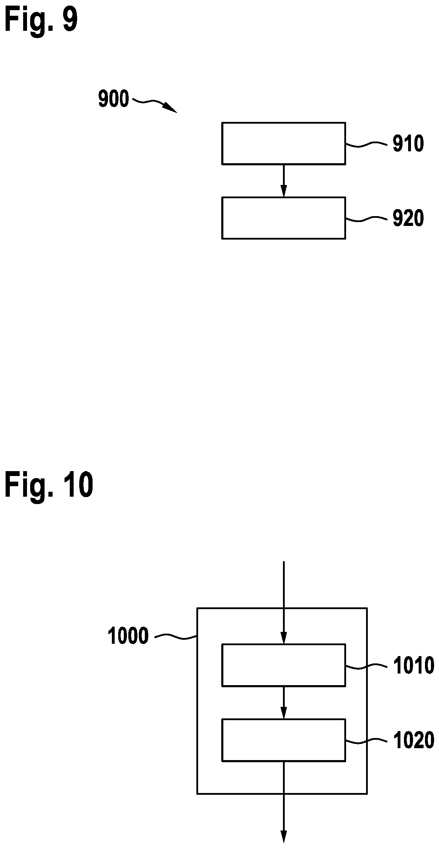

Fig. 9 zeigt ein Ablaufdiagramm eines Herstellungsverfahrens 900, das beispielsweise zur Herstellung eines vorangehend anhand der Figuren 1 bis 8 beschriebenen Interferometers ausgeführt werden kann. Das Verfahren 900 umfasst einen Schritt 910, in dem das erste Spiegelelement am Halteelement gegenüber der Aktuierungsausnehmung angeordnet wird, und das zweite Spiegelelement im Spiegelabstand gegenüber dem ersten Spiegelelement angeordnet wird, um den optischen Spalt zu bilden. Dabei wird das erste Spiegelelement zwischen dem zweiten Spiegelelement und dem Halteelement angeordnet und der optische Spalt durch das erste Spiegelelement von der Aktuierungsausnehmung räumlich getrennt. In einem weiteren Schritt 920 wird das Elektrodenpaar durch Anordnen oder Definieren der ersten Aktuierungselektrode an oder in einer der Aktuierungsausnehmung zugewandten Seite eines der Spiegelelemente und einer zweiten Aktuierungselektrode an einer der ersten Aktuierungselektrode gegenüberliegenden Seite der Aktuierungsausnehmung. Der Spiegelabstand ist dabei durch Anlegen einer elektrischen Spannung an das Elektrodenpaar änderbar. Hierbei ist anzumerken, dass ein Herstellungsverfahren diese Schritte enthält. Die Reihenfolge der Ausführung solcher Schritte ist allerdings nicht erheblich.

Fig. 10 zeigt ein Blockschaltbild einer Vorrichtung 1000 zum Herstellen eines Interferometers, wobei die Vorrichtung 1000 eine Einheit 1010 zum Anordnen eines ersten Spiegelelements an einem Halteelement gegenüber einer Aktuierungsausnehmung des Halteelements aufweist, und eines zweiten Spiegelelements in einem Spiegelabstand gegenüber dem ersten Spiegelelement, um einen optischen Spalt zu bilden, wobei das erste Spiegelelement zwischen dem zweiten Spiegelelement und dem Halteelement angeordnet wird und der optische Spalt durch das erste Spiegelelement von der Aktuierungsausnehmung räumlich getrennt ist. Ferner umfasst die Vorrichtung 1000 eine Einheit 1020 zum Bilden eines Elektrodenpaars durch Anordnen oder Definieren einer ersten Aktuierungselektrode an oder in einer der Aktuierungsausnehmung zugewandten Seite eines der Spiegelelemente und einer zweiten Aktuierungselektrode an einer der ersten Aktuierungselektrode gegenüberliegenden Seite der Aktuierungsausnehmung, wobei der Spiegelabstand durch Anlegen einer elektrischen Spannung an das Elektrodenpaar änderbar ist.

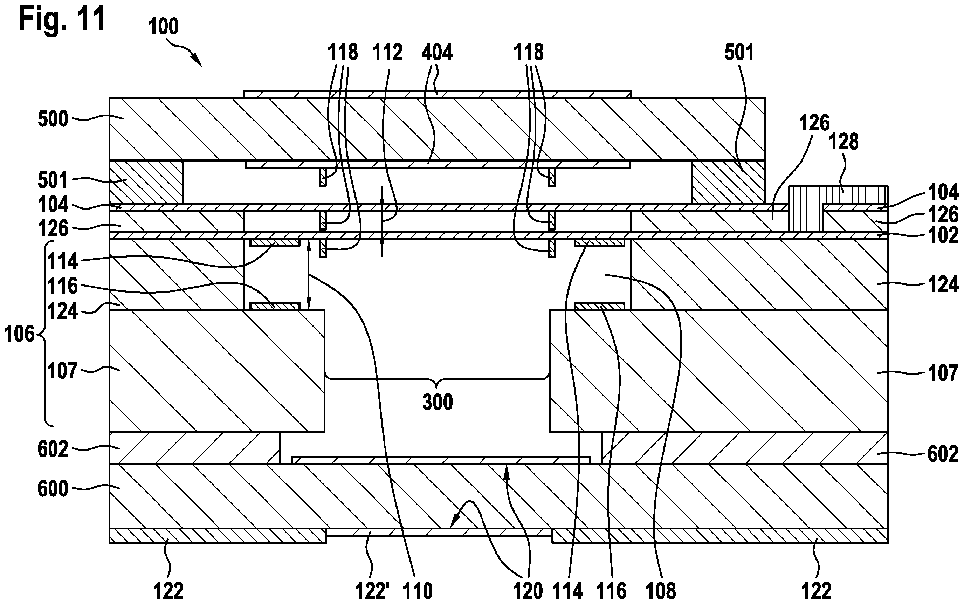

Fig. 11 zeigt eine schematische Darstellung eines Interferometers 100.

Gezeigt ist ein besonders günstiges Beispiel des vorangehend anhand von Fig. 6 beschriebenen Interferometers. Gemäß Fig. 11 besteht das Interferometer 100 aus einer Kombination eines MEMS-Fabry-Pérot-Interferometers 100 mit Durchgangsöffnung 300 im Halteelement 106 und gleichzeitiger Verkappung mit Glaswafern als dem Kappenelement 500 und dem zusätzlichen Kappenwafer 600.

Dadurch werden, bei gleichzeitig transparenter Verkappung, vergleichsweise dicke Siliziumbereiche aus dem Strahlengang entfernt, was einen solchen Aufbau auch für Wellenlängen unter 1100 nm tauglich macht, in dem Silizium elektromagnetische Strahlung absorbiert. Durch die Kombination mit der Aktuierung des ersten Spiegelelements 102, hier eines unteren Spiegels, nach unten und einem breitbandigen Spiegel können so extrem breitbandige Fabry-Pérot-Interferometer realisiert werden. Unter einem breitbandigen Fabry-Pérot-Interferometer kann gemäß dem hier vorgestellten Ansatz ein durchstimmbares schmalbandiges Fabry-Pérot-Interferometer verstanden werden, welches über einen breiten Spektralbereich durchstimmbar ist.

Zusätzlich bleiben die generellen Vorteile eines verkappten Fabry-Pérot-Interferometers erhalten, wie etwa Schutz vor Umgebungsfeuchte, Einschluss eines definierten Innendrucks, Partikelrobustheit, Schutz beim Sägen oder Baugröße eines Chip-Scale-Package.

Gemäß diesem Beispiel sind die beiden Spiegelelemente 102, 104 als Spiegelmembranen realisiert, die durch den optischen Spalt 112 voneinander getrennt sind. Hierbei bildet das erste Spiegelelement 102 zusammen mit dem Halteelement 106 den Aktuierungsspalt 110.

Für Wellenlängen unter 1100 nm geeignete transparente Kappenmaterialien sind beispielsweise Germanium, Quarz, Borosilicatgläser, Gläser mit angepasster Wärmeausdehnung, sonstige spezielle Gläser oder auch Saphir. Die Glaswafer sind beispielsweise durch eutektisches Bonden oder Bonden mit Sealglas im Interferometer 100 befestigt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Interferometer (100) mit folgenden Merkmalen:

   einem Halteelement (106) mit einer Aktuierungsausnehmung (108);
   einem ersten Spiegelelement (102), das am Halteelement (106) der Aktuierungsausnehmung (108) gegenüberliegend angeordnet ist;
   einem zweiten Spiegelelement (104), das dem ersten Spiegelelement (102) in einem Spiegelabstand gegenüberliegend angeordnet ist, um einen optischen Spalt (112) zu bilden, wobei das erste Spiegelelement (102) zwischen dem zweiten Spiegelelement (104) und dem Halteelement (106) angeordnet ist und der optische Spalt (112) durch das erste Spiegelelement (102) von der Aktuierungsausnehmung (108) räumlich getrennt ist; und
   einem Elektrodenpaar aus einer ersten Aktuierungselektrode (114), die an oder in einem der Spiegelelemente (102, 104) definiert oder angeordnet ist, und einer zweiten Aktuierungselektrode (116), die an einer der ersten Aktuierungselektrode (114) gegenüberliegenden Seite der Aktuierungsausnehmung (108) definiert oder angeordnet ist, wobei der Spiegelabstand durch Anlegen einer elektrischen Spannung an das Elektrodenpaar änderbar ist;
   **gekennzeichnet durch**
   ein Zusatzelektrodenpaar aus einer ersten Zusatzaktuierungselektrode (200), die an oder in dem ersten Spiegelelement (102) definiert oder einer dem zweiten Spiegelelement (104) gegenüberliegenden Seite des ersten Spiegelelements (102) angeordnet ist, und einer zweiten Zusatzaktuierungselektrode (202), die an einer der ersten Zusatzaktuierungselektrode (200) gegenüberliegenden Seite des zweiten Spiegelelements (104) angeordnet ist, wobei ferner die erste Zusatzaktuierungselektrode (200) auf einer der ersten Aktuierungselektrode (114) gegenüberliegenden Seite des ersten Spiegelelements (102) angeordnet ist und wobei der Spiegelabstand durch Anlegen einer elektrischen Spannung an das Zusatzelektrodenpaar änderbar ist und
   ein Kappenelement (500), das dem zweiten Spiegelelement (104) in einem Kappenabstand gegenüberliegend angeordnet ist, um einen Aktuierungsspalt (502) zu bilden, wobei der Aktuierungsspalt (502) durch das zweite Spiegelelement (104) vom optischen Spalt (112) räumlich getrennt ist, und mit einem weiteren Elektrodenpaar aus einer ersten weiteren Aktuierungselektrode (504), die an oder in dem ersten Spiegelelement (102) definiert oder einer dem Kappenelement (500) gegenüberliegenden Seite des zweiten Spiegelelements (104) angeordnet ist, und einer zweiten weiteren Aktuierungselektrode (506), die an einer der ersten weiteren Aktuierungselektrode (504) gegenüberliegenden Seite des Kappenelements (500) angeordnet ist, wobei der Kappenabstand durch Anlegen einer elektrischen Spannung an das weitere Elektrodenpaar änderbar ist.

2. Interferometer (100) gemäß Anspruch 1, bei dem die erste Aktuierungselektrode (114) an oder in dem ersten Spiegelelement (102) definiert oder angeordnet ist.

3. Interferometer (100) gemäß einem der vorangegangenen Ansprüche, bei dem das Halteelement (106) ein Substrat (107) und/oder eine Kappe (400) aufweist, wobei das Halteelement (106) ferner eine Zusatzschicht (124, 402) umfasst, in welcher die Aktuierungsausnehmung (108) ausgebildet ist.

4. Interferometer (100) gemäß einem der vorangegangenen Ansprüche, bei der das erste Spiegelelement (102) zumindest einen Anschlag (118) zum Verhindern eines Verbindens, insbesondere infolge eines Anschlagens, des ersten Spiegelelements (102) an die Aktuierungsausnehmung (108) und/oder an das zweite Spiegelelement (104) aufweist und/oder das zweite Spiegelelement (104) zumindest einen Anschlag (118) zum Verhindern eines Verbindens, insbesondere nach einem Anschlagen, des zweiten Spiegelelements (104) an das erste Spiegelelement (102) aufweist.

5. Interferometer (100) gemäß Anspruch 4, bei dem das Kappenelement (500) als transparentes Substrat, insbesondere als Glassubstrat, ausgeführt ist.

6. Interferometer (100) gemäß Anspruch 4 oder 5, mit zumindest einem zusätzlichen Kappenwafer (600), der auf einer dem Kappenelement (500) gegenüberliegenden Seite des Halteelements (106) angeordnet ist, um das Interferometer (100) beidseitig zu verkappen.

7. Interferometer (100) gemäß Anspruch 6, bei dem der zusätzliche Kappenwafer (600) als transparentes Substrat, insbesondere als Glassubstrat, ausgeführt ist.

8. Interferometer (100) gemäß einem der vorangegangenen Ansprüche, mit zumindest einem Messelektrodenpaar (700) zum Messen des Spiegelabstands.

9. Interferometer (100) gemäß einem der vorangegangenen Ansprüche, bei der das Halteelement (106) eine dem ersten Spiegelelement (102) gegenüberliegende Durchgangsöffnung (300) aufweist.

10. Verfahren (900) zum Herstellen eines Interferometers (100), wobei das Verfahren (900) folgende Schritte umfasst:

Anordnen (910) eines ersten Spiegelelements (102) an einem Halteelement (106) gegenüber einer Aktuierungsausnehmung (108) des Halteelements(106), und eines zweiten Spiegelelements (104) in einem Spiegelabstand gegenüber dem ersten Spiegelelement (102), um einen optischen Spalt (112) zu bilden, wobei das erste Spiegelelement (102) zwischen dem zweiten Spiegelelement (104) und dem Halteelement (106) angeordnet wird und der optische Spalt (112) durch das erste Spiegelelement (102) von der Aktuierungsausnehmung (108) räumlich getrennt ist; und

Bilden (920) eines Elektrodenpaars durch Anordnen oder Definieren einer ersten Aktuierungselektrode (114) an oder in einer der Aktuierungsausnehmung (108) zugewandten Seite eines der Spiegelelemente (102, 104) und einer zweiten Aktuierungselektrode (116) an einer der ersten Aktuierungselektrode (114) gegenüberliegenden Seite der Aktuierungsausnehmung (108), wobei der Spiegelabstand durch Anlegen einer elektrischen Spannung an das Elektrodenpaar änderbar ist,

**dadurch gekennzeichnet, dass**

im Schritt des Bildens (920) ein Zusatzelektrodenpaar aus einer ersten Zusatzaktuierungselektrode (200), die an oder in dem ersten Spiegelelement (102) definiert oder einer dem zweiten Spiegelelement (104) gegenüberliegenden Seite des ersten Spiegelelements (102) angeordnet wird, und einer zweiten Zusatzaktuierungselektrode (202), die an einer der ersten Zusatzaktuierungselektrode (200) gegenüberliegenden Seite des zweiten Spiegelelements (104) angeordnet wird, gebildet wird wobei ferner die erste Zusatzaktuierungselektrode (200) auf einer der ersten Aktuierungselektrode (114) gegenüberliegenden Seite des ersten Spiegelelements (102) angeordnet wird und wobei der Spiegelabstand durch Anlegen einer elektrischen Spannung an das Zusatzelektrodenpaar änderbar ist und dass im Schritt des Bildens (920) ein Kappenelement (500) gebildet wird, das dem zweiten Spiegelelement (104) in einem Kappenabstand gegenüberliegend angeordnet oder anordenbar ist, um einen Aktuierungsspalt (502) zu bilden, wobei der Aktuierungsspalt (502) durch das zweite Spiegelelement (104) vom optischen Spalt (112) räumlich getrennt ist, und mit einem weiteren Elektrodenpaar aus einer ersten weiteren Aktuierungselektrode (504), die an oder in dem ersten Spiegelelement (102) definiert oder einer dem Kappenelement (500) gegenüberliegenden Seite des zweiten Spiegelelements (104) angeordnet oder anordenbar ist, und einer zweiten weiteren Aktuierungselektrode (506), die an einer der ersten weiteren Aktuierungselektrode (504) gegenüberliegenden Seite des Kappenelements (500) angeordnet oder anordenbar ist, wobei der Kappenabstand durch Anlegen einer elektrischen Spannung an das weitere Elektrodenpaar änderbar ist.

11. Vorrichtung (1000) mit Einheiten (1010, 1020), die ausgebildet sind, das Interferometer (100) nach Anspruch 1 herzustellen und einer Recheneinheit, die diese Einheiten so steuert, dass die Schritte des Verfahrens nach Anspruch 10 ausgeführt werden.

12. Computerprogramm, das so ausgebildet ist, dass bei einer Ausführung des Programms auf der Recheneinheit der Vorrichtung von Anspruch 11 das Verfahren nach Anspruch 10 ausgeführt wird.

13. Maschinenlesbares Speichermedium, auf dem das Computerprogramm nach Anspruch 12 gespeichert ist.

**Claims**

1. Interferometer (100) having the following features:

   a holding element (106) with an actuation recess (108);
   a first mirror element (102), which is arranged on the holding element (106), opposite the actuation recess (108);
   a second mirror element (104), which is arranged opposite the first mirror element (102) at a mirror spacing in order to form an optical gap (112), the first mirror element (102) being arranged between the second mirror element (104) and the holding element (106), and the optical gap (112) being spatially separated from the actuation recess (108) by the first mirror element (102); and
   an electrode pair consisting of a first actuation electrode (114), which is defined or arranged on or in one of the mirror elements (102, 104), and a second actuation electrode (116), which is defined or arranged on a side of the actuation recess (108) opposite the first actuation electrode (114), the mirror spacing being changeable by applying a voltage to the electrode pair,
   **characterized by**
   an additional electrode pair consisting of a first additional actuation electrode (200), which is defined on or in the first mirror element (102) or arranged on or in a side of the first mirror element (102) opposite the second mirror element (104), and a second additional actuation electrode (202), which is arranged on a side of the second mirror element (104) opposite the first additional actuation electrode (200), the first additional actuation electrode (200) further being arranged on a side of the first mirror element (102) opposite the first actuation electrode (114) and the mirror spacing being changeable by applying a voltage to the additional electrode pair, and
   a cover element (500), which is arranged opposite the second mirror element (104) at a cover spacing in order to form an actuation gap (502), the actuation gap (502) being spatially separated from the optical gap (112) by the second mirror element (104), and having a further electrode pair consisting of a first further actuation electrode (504), which is defined on or in the first mirror element (102) or arranged on or in a side of the second mirror element (104) opposite the cover element (500), and a second further actuation electrode (506), which is arranged on a side of the cover element (500) opposite the first further actuation electrode (504), the cover spacing being changeable by applying a voltage to the further electrode pair.

2. Interferometer (100) according to Claim 1, wherein the first actuation electrode (114) is defined or arranged on or in the first mirror element (102).

3. Interferometer (100) according to either of preceding claims, wherein the holding element (106) has a substrate (107) and/or a cover (400), the holding element (106) furthermore comprising an additional layer (124, 402) in which the actuation recess (108) is formed.

4. Interferometer (100) according to any one of the preceding claims, wherein the first mirror element (102) has at least one abutment (118) for preventing connection, in particular due to abutment, of the first mirror element (102) to the actuation recess (108) and/or to the second mirror element (104), and/or the second mirror element (104) has at least one abutment (118) for preventing connection, in particular following abutment, of the second mirror element (104) to the first mirror element (102).

5. Interferometer (100) according to Claim 4, wherein the cover element (500) is configured as a transparent substrate, in particular as a glass substrate.

6. Interferometer (100) according to Claim 4 or 5, having at least one additional cover wafer (600), which is arranged on a side of the holding element (106) opposite the cover element (500) in order to cover the interferometer (100) on both sides.

7. Interferometer (100) according to Claim 6, wherein the additional cover wafer (600) is configured as a transparent substrate, in particular as a glass substrate.

8. Interferometer (100) according to any one of the preceding claims, having at least one measurement electrode pair (700) for measuring the mirror spacing.

9. Interferometer (100) according to any one of the preceding claims, wherein the holding element (106) has a through-opening (300) opposite the first mirror element (102).

**10.** Method (900) for producing an interferometer (100), the method (900) comprising the following steps:

arranging (910) a first mirror element (102) on a holding element (106), opposite an actuation recess (108) of the holding element (106), and a second mirror element (104) at a mirror spacing from the first mirror element (102) in order to form an optical gap (112), the first mirror element (102) being arranged between the second mirror element (104) and the holding element (106), and the optical gap (112) being spatially separated from the actuation recess (108) by the first mirror element (102); and

forming (920) an electrode pair by arranging or defining a first actuation electrode (114) on or in a side of one of the mirror elements (102, 104) facing toward the actuation recess (108) and a second actuation electrode (116) on a side of the actuation recess (108) opposite the first actuation electrode (114), the mirror spacing being changeable by applying a voltage to the electrode pair

**characterized in that**

in the forming (920) step, an additional electrode pair is formed consisting of a first additional actuation electrode (200), which is defined on or in the first mirror element (102) or arranged on or in a side of the first mirror element (102) opposite the second mirror element (104), and a second additional actuation electrode (202), which is arranged on a side of the second mirror element (104) opposite the first additional actuation electrode (200), the first additional actuation electrode (200) further being arranged on a side of the first mirror element (102) opposite the first actuation electrode (114) and the mirror spacing being changeable by applying a voltage to the additional electrode pair, and **in that**

in the forming (920) step, a cover element (500) is formed, which is arranged or arrangeable opposite the second mirror element (104) at a cover spacing in order to form an actuation gap (502), the actuation gap (502) being spatially separated from the optical gap (112) by the second mirror element (104), and having a further electrode pair consisting of a first further actuation electrode (504), which is defined on or in the first mirror element (102) or arranged or arrangeable on or in a side of the second mirror element (104) opposite the cover element (500), and a second further actuation electrode (506), which is arranged or arrangeable on a side of the cover element (500) opposite the first further actuation electrode (504), the cover spacing being changeable by applying a voltage to the further electrode pair.

**11.** Device (1000) having units (1010, 1020) which are adapted to produce the interferometer (100) according to Claim 1 and having a computing unit which controls these units so that the steps of the method according to Claim 10 are carried out.

**12.** Computer program which is adapted so that when the program is executed on the computing unit of the device of Claim 11, the method according to Claim 10 is carried out.

**13.** Machine-readable storage medium on which the computer program according to Claim 12 is stored.

**Revendications**

**1.** Interféromètre (100), comprenant les particularités suivantes :

un élément de support (106) pourvu d'un évidement d'actionnement (108) ;
un premier élément de miroir (102) qui est disposé sur l'élément de support (106) en face de l'évidement d'actionnement (108) ;
un deuxième élément de miroir (104) qui est disposé en face du premier élément de miroir (102) à une distance de miroir afin de former une fente optique (112), dans lequel le premier élément de miroir (102) est disposé entre le deuxième élément de miroir (104) et l'élément de support (106), et la fente optique (112) est physiquement séparée de l'évidement d'actionnement (108) par l'élément de miroir (102) ; et
une paire d'électrodes composée d'une première électrode d'actionnement (114) qui est définie ou disposée sur ou dans l'un des éléments de miroir (102, 104), et d'une deuxième électrode d'actionnement (116) qui est définie ou disposée sur un côté de l'évidement d'actionnement (108) en face de la première électrode d'actionnement (114), dans lequel la distance de miroir peut être modifiée par l'application d'une tension électrique à la paire d'électrodes ;

**caractérisé par**

une paire d'électrodes supplémentaires composée d'une première électrode d'actionnement supplémentaire (200) qui est définie sur ou dans le premier élément de miroir (102) ou est disposée sur un côté du premier élément de miroir (102) en face du deuxième élément de miroir (104), et d'une deuxième électrode d'actionnement supplémentaire (202) qui est disposée sur un côté du deuxième élément de miroir (104) en face de la première électrode d'actionnement supplémentaire (200), dans lequel en outre la première électrode d'actionnement supplémentaire (200) est disposée sur un côté du premier élément de miroir (102) en face de la première électrode d'actionnement (114), et dans lequel la distance de miroir peut être modifiée par l'application d'une tension électrique à la paire d'électrodes supplémentaires, et

un élément d'encapsulation (500) qui est disposé en face du deuxième élément de miroir (104) à une distance d'encapsulation afin de former une fente d'actionnement (502), dans lequel la fente d'actionnement (502) est physiquement séparée de la fente optique (112) par le deuxième élément de miroir (104), et comprenant une autre paire d'électrodes composée d'une première autre électrode d'actionnement (504) qui est définie sur ou dans le premier élément de miroir (102) ou est disposée sur un côté du deuxième élément de miroir (104) en face de l'élément d'encapsulation (500), et d'une deuxième autre électrode d'actionnement (506) qui est disposée sur un côté de l'élément d'encapsulation (500) en face de l'autre première électrode d'actionnement (504), dans lequel la distance d'encapsulation peut être modifiée par l'application d'une tension électrique à l'autre paire d'électrodes.

2. Interféromètre (100) selon la revendication 1, dans lequel la première électrode d'actionnement (114) est définie ou disposée sur ou dans le premier élément de miroir (102).

3. Interféromètre (100) selon l'une quelconque des revendications précédentes, dans lequel l'élément de support (106) présente un substrat (107) et/ou une capsule (400), dans lequel l'élément de support (106) comprend en outre une couche supplémentaire (124, 402) dans laquelle est réalisé l'évidement d'actionnement (108) .

4. Interféromètre (100) selon l'une quelconque des revendications précédentes, dans lequel le premier élément de miroir (102) présente au moins une butée (118) pour empêcher une connexion, en particulier suite à une venue en butée du premier élément de miroir (102) contre l'évidement d'actionnement (108) et/ou le deuxième élément de miroir (104), et/ou le deuxième élément de miroir (104) présente au moins une butée (118) pour empêcher une connexion, en particulier suite à une venue en butée du deuxième élément de miroir (104) contre le premier élément de miroir (102).

5. Interféromètre (100) selon la revendication 4, dans lequel l'élément d'encapsulation (500) est réalisé comme un substrat transparent, en particulier un substrat en verre.

6. Interféromètre (100) selon la revendication 4 ou 5, comprenant au moins une plaquette d'encapsulation supplémentaire (600) qui est disposée sur un côté de l'élément de support (106) en face de l'élément d'encapsulation (500) afin d'encapsuler l'interféromètre (100) des deux côtés.

7. Interféromètre (100) selon la revendication 6, dans lequel la plaquette d'encapsulation supplémentaire (600) est réalisée comme un substrat transparent, en particulier comme un substrat de verre.

8. Interféromètre (100) selon l'une quelconque des revendications précédentes, comprenant au moins une paire d'électrodes de mesure (700) pour mesurer la distance de miroir.

9. Interféromètre (100) selon l'une quelconque des revendications précédentes, dans lequel l'élément de support (106) présente une ouverture de passage (300) en face du premier élément de miroir (102).

10. Procédé (900) permettant de fabriquer un interféromètre (100), le procédé (900) comprenant les étapes suivantes consistant à :

disposer (910) un premier élément de miroir (102) sur un élément de support (106) en face d'un évidement d'actionnement (108) de l'élément de support (106), et un deuxième élément de miroir (104) à une distance de miroir en face du premier élément de miroir (102) afin de former une fente optique (112), dans lequel le premier élément de miroir (102) est disposé entre le deuxième élément de miroir (104) et l'élément de support (106), et la fente optique (112) est physiquement séparée de l'évidement d'actionnement (108) par le premier élément de miroir (102) ; et

former (920) une paire d'électrodes en disposant ou en définissant une première électrode d'actionnement (114) sur ou dans un côté d'un des éléments de miroir (102, 104) tourné vers l'évidement d'actionnement (108), et une deuxième électrode d'actionnement (116) sur un côté de l'évidement d'actionnement (108) en face de la première électrode d'actionnement (114), dans lequel la distance de miroir peut être modifiée par l'application d'une tension électrique à la paire d'électrodes,

**caractérisé en ce que**

à l'étape de la formation (920) d'une paire d'électrodes supplémentaires à partir d'une première électrode d'actionnement supplémentaire (200) qui est définie sur ou dans le premier élément de miroir (102) ou est disposée sur un côté du premier élément de miroir (102) en face du deuxième élément de miroir (104), et d'une deuxième électrode d'actionnement supplémentaire (202) qui est disposée sur un côté du deuxième élément de miroir (104) en face de la première électrode d'actionnement supplémentaire (200), dans lequel en outre la première électrode d'actionnement supplémentaire (200) est disposée sur un côté du premier élément de miroir (102) en face de la première électrode d'actionnement (114), et dans lequel la distance de miroir peut être modifiée par l'application d'une tension électrique à la paire d'électrodes supplémentaires, et **en ce que**

à l'étape de la formation (920), un élément d'encapsulation (500) est formé qui est ou peut être disposé en face du deuxième élément de miroir (104) à une distance d'encapsulation afin de former une fente d'actionnement (502), dans lequel la fente d'actionnement (502) est physiquement séparée de la fente optique (112) par le deuxième élément de miroir (104), et comprenant une autre paire d'électrodes composée d'une première autre électrode d'actionnement (504) qui est définie sur ou dans le premier élément de miroir (102) ou est disposée sur un côté du deuxième élément de miroir (104) en face de l'élément d'encapsulation (500), et d'une deuxième autre électrode d'actionnement (506) qui est ou peut être disposée sur un côté de l'élément d'encapsulation (500) en face de l'autre première électrode d'actionnement (504), dans lequel la distance d'encapsulation peut être modifiée par l'application d'une tension électrique à l'autre paire d'électrodes.

11. Dispositif (1000) comprenant des unités (1010, 1020) qui sont réalisées pour fabriquer l'interféromètre (100) selon la revendication 1, et une unité de calcul qui commande lesdites unités de telle sorte que les étapes du procédé selon la revendication 10 sont exécutées.

12. Programme informatique qui est réalisé de telle sorte que lorsque le programme est exécuté sur l'unité de calcul du dispositif selon la revendication 11, le procédé selon la revendication 10 est exécuté.

13. Support de stockage lisible par machine sur lequel est stocké le programme informatique selon la revendication 12.

# Fig. 1

**Fig. 2**

EP 3 781 916 B1

Fig. 3

**Fig. 4**

EP 3 781 916 B1

# Fig. 5

EP 3 781 916 B1

Fig. 6

**Fig. 7**

EP 3 781 916 B1

Fig. 8

EP 3 781 916 B1

# Fig. 9

900

910

920

# Fig. 10

1000

1010

1020

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012050751 A
- US 2014022643 A
- DE 10226305
- DE 69628669 T2
- WO 2018024543 A1
- WO 02086582 A1
- JP 2012127862 A
- US 2016286054 A1